# FASCICULE DE BREVET EUROPEEN

(11) **EP 2 139 811 B1**
(45) Date de publication et mention de la délivrance du brevet: **22.06.2011**
(21) Numéro de dépôt: 08787929.2
(22) Date de dépôt: 09.04.2008
(51) Int. Cl.: C01B 31/36, C09K 3/14

(54) **CARBURE DE BORE ET SON PROCEDE DE FABRICATION**
BORONCARBID UND VERFAHREN ZU SEINER HERSTELLUNG
BORON CARBIDE AND METHOD FOR MAKING SAME

(30) Priorité: 11.04.2007 FR 0702637
(43) Date de publication de la demande: 06.01.2010
(73) Titulaire: Centre National de la Recherche Scientifique, 75016 Paris (FR); Universite Pierre Et Marie Curie - Paris 6, 75005 Paris (FR); European Synchrotron Radiation Facility, 38043 Grenoble Cedex 09 (FR)
(72) Inventeur: LE GODEC, Yann, F-75013 Paris (FR); MEZOUAR, Mohamed, F-38000 Grenoble (FR); ANDRAULT, Denis, F-63000 Clermont-ferrand (FR); SOLOZHENKO, Vladimir, F-92110 Clichy (FR); KURAKEVYCH, Oleksandr, 91170 Viry-Châtillon (FR)
(74) Mandataire: Noel, Chantal Odile
(86) Numéro de dépôt international: PCT/FR2008/000494
(87) Numéro de publication internationale: WO 2008/139067

(56) Documents cités:
- RICHTER ET AL: "Investigation of novel superhard materials by multi-cycling nanoindentation" DIAMOND AND RELATED MATERIALS, ELSEVIER SCIENCE PUBLISHERS, AMSTERDAM, NL, vol. 15, no. 11-12, 22 novembre 2006 (2006-11-22), pages 2019-2023, XP005805891 ISSN: 0925-9635
- SOLOZHENKO V L ET AL: "Production, structure, properties synthesis of superhard composites in the B-C system" JOURNAL OF SUPERHARD MATERIALS ALLERTON PRESS USA, vol. 28, no. 5, 2006, pages 1-6, XP008085325 ISSN: 1063-4576
- OTTAVIANI, BERNARD ET AL: "Boronated carbons: structural characterization and low temperature physical properties of disordered solids" JOURNAL OF MATERIALS CHEMISTRY , 8(1), 197-203 CODEN: JMACEP; ISSN: 0959-9428, 1998, XP002456559
- FLANDROIS S ET AL: "Boron-substituted carbons and their intercalation compounds" JOURNAL OF PHYSICS AND CHEMISTRY OF SOLIDS, PERGAMON PRESS, LONDON, GB, vol. 57, no. 6-8, 1996, pages 741-744, XP002315247 ISSN: 0022-3697
- QIANKU HU ET AL: "First-principles studies of structural and electronic properties of hexagonal BC5" PHYSICAL REVIEW B (CONDENSED MATTER AND MATERIALS PHYSICS) APS THROUGH AIP USA, vol. 73, no. 21, 1 juin 2006 (2006-06-01), pages 214116-1, XP002456561 ISSN: 0163-1829
- WAY B M ET AL: "Preparation and characterization of BxC1-x thin films with the graphite structure" PHYSICAL REVIEW B (CONDENSED MATTER) USA, vol. 46, no. 3, 15 juillet 1992 (1992-07-15), pages 1696-1702, XP002456560 ISSN: 0163-1829
- QIANG WANG ET AL: "Ab initio calculation of structural properties of C3B and C5B compounds" PHYSICAL REVIEW B (CONDENSED MATTER) APS THROUGH AIP USA, vol. 55, no. 1, 1 janvier 1997 (1997-01-01), pages 8-10, XP002456562 ISSN: 0163-1829

## Description

L'invention concerne un carbure de bore et son procédé de fabrication.

Elle concerne également un matériau super-abrasif et un dispositif d'usinage comprenant ce carbure de bore.

Le diamant a trouvé une application très large dans la science et la technologie moderne en raison de ses propriétés uniques telles qu'une dureté extrême, une conductivité thermique élevée, une large bande de gap, une mobilité de trous et d'électrons élevée.

Mais c'est également un matériau non résistant à l'oxydation et réactif avec les métaux ferreux.

La demande croissante pour des matériaux ressemblant au diamant (diamond-like) dans des applications électroniques et électrochimiques, pour la coupe et la mise en forme des métaux durs et des céramiques, a stimulé la recherche pour de nouvelles phases hyper-dures avancées qui sont thermiquement et chimiquement plus stables que le diamant pur.

Ainsi, des traces d'impuretés bore ont été introduites dans des structures diamant pour changer les propriétés électriques de la forme diamant pour passer d'un isolant à un semi-conducteur.

De plus, le diamant dopé au bore est un supraconducteur du type II avec une température de transition T_{c} d'environ 277,16°C (4 K) alors que le carbure de bore ayant une structure graphite (graphite-like) serait un supraconducteur avec une température de transition T_{c} d'environ 295,16°C (22 K).

En plus des formes diamant dopé au bore, deux carbures riches en bore, B₄C et B₅₀C₂, sont connues. Elles sont relativement dures mais pas autant que le diamant.

Mais toutes les phases B-C présentent une résistance plus élevée à l'oxygène et aux métaux ferreux que les matériaux carbonés similaires.

Ainsi, on a supputé que les phases B-C du type diamant combineraient les meilleures propriétés de chaque élément incluant une dureté très élevée et une stabilité chimique et thermique élevée.

Un certain nombre de phases B-C de structure graphite de différentes stoechiométries (appelées graphite substitué au bore avec des teneurs en bore jusqu'à 50% atomique) ont ainsi été synthétisées par dépôt thermochimique en phase vapeur.

On attendait que ces nouveaux matériaux soient des précurseurs parfaits pour les phases B-C riche en bore du type diamant.

Cependant, leurs comportements à pression élevée et à des températures élevées n'a pas encore été élucidé jusqu'à présent.

Des expériences récentes de trempe réalisées sur du BC₃ de structure graphite ont montré qu'à 20 GPa et 2473,16°C (2200 K), dans une presse multi-enclumes, la phase se décompose en un mélange de phases diamant dopé au bore et carbure de bore (Solozhenko, V. & al., Synthesis of bulk superhard semiconducting B.C. materials. Appl. Phys. Lett 85, 1508-1510 (2004)).

Récemment, des ségrégations de phases du B-C_{1,6} du type graphite en un mélange de diamant, de carbure de bore et de bore élémentaire ont été observées dans une cellule à enclumes de diamant (DAC) à 45 GPa et 2503,16°C (2230 K) (Shirasaki, T. & al, "Synthesis and characterization of boron-substituted carbons", Carbon 38, 1461-1467 (2000)) bien que les auteurs indiquaient avoir synthétisé BC₁,₆ cubique.

L'invention vise à pallier les inconvénients des matériaux de l'art antérieur en proposant un carbure de bore qui est à la fois dur et chimiquement et thermiquement stable.

Ce carbure de bore a la formule chimique BC₅ et une structure cubique de type diamant avec un paramètre de maille a = 3,635 ± 0,006 Å.

Ce carbure de bore a une dureté Vickers *Hᵥ* comprise entre 63 et 79 GPa, et plus particulièrement de 71 GPa, ce qui est une valeur proche de la dureté du carbonitrure de bore cubique de formule c-BC₂N qui est la phase la plus dure après celle du diamant connue jusqu'à présent.

Le pentacarbure de bore cubique de l'invention a une ténacité à la fracture K_{Ic} comprise entre 7 et 12 MPa m^{½}, plus particulièrement de 9,5 MPa m^{½}, qui correspond au matériau dans sa totalité. Cette valeur est notablement plus élevée que celle des valeurs correspondantes des phases connues polycristallines et monocristallines du système B-C-N.

De plus, le pentacarbure cubique de l'invention a une nanodureté extrêmement élevée comprise entre 68 et 88 GPa, plus particulièrement de 78 GPa.

Le pentacarbure de bore cubique de l'invention est stable jusqu'à une température de 2163,16°C (1890K).

Le pentacarbure de bore de l'invention est synthétisé à partir de pentacarbure de bore de structure turbostratique, t-BC₅, à des températures d'environ 2473,16 °C (2200K) et à des pressions d'environ 20 GPa.

Le pentacarbure cubique de l'invention est également semi-conducteur. II présente une dureté extrême comparable à celle des monocristaux de diamant et il a une ténacité à la fracture inhabituellement élevée en combinaison avec une stabilité thermique très élevée, ce qui en fait un matériau super-abrasif exceptionnel. II peut être en particulier utilisé comme dispositif d'usinage.

L'invention sera mieux comprise et d'autres avantages et caractéristiques de celle-ci apparaîtront plus clairement à la lumière de la description explicative qui suit.

Les exemples de mise en oeuvre et de réalisation de l'invention qui sont donnés ci-après ne sont donnés qu'à titre purement illustratif et non limitatif de l'invention.

Le pentacarbure de bore cubique selon l'invention est obtenu à partir d'un précurseur pentacarbure de bore turbostratique, t-BC₅. Le t-BC₅ peut être obtenu par dépôt thermochimique en phase vapeur d'un mélange de C₂H₂, de BC1₃ et de H₂ (Ottaviani B. & al., J. Mater. Chem., 1998, 8(1), 197-203).

Le t-BC₅ est comprimé à froid jusqu'à entre 19 et 22 GPa, de préférence à environ 20 GPa. A cette pression, le t-BC₅ est ensuite chauffé à une température de 2473,16°C (2200 K).

II est maintenu à cette pression et à cette température pendant entre 5 et 15 mn, de préférence environ 10 minutes pour faire croître les cristaux de BC₅ cubique, c-BC₅, obtenus.

Ensuite, le c-BC₅ cubique obtenu est naturellement ramené à la température ambiante en coupant le chauffage et la pression est ramenée à la pression ambiante.

### Exemple 1: Synthèse du pentacarbure de bore cubique, c-BC₅ de l'invention.

### a) Synthèse du pentacarbure de bore turbostratrique, t-BC₅.

L'échantillon de t-BC₅ initial a été préparé par une technique de dépôt chimique en phase vapeur sous basse pression (LPCVD). Le réacteur était un tube de 40 mm de diamètre en oxyde d'aluminium Al₂O₃. La pression de gaz dans ce réacteur (standard, selon la description de DERRE A & al., J. Phys. IV 3, p195 (1993)) était maintenue constante à 30 Mbar, la température du réacteur et du substrat (en quartz) était portée à 1100°C. Les gaz injectés dans ce réacteur étaient alors BCl₃ (à raison d'un flux de 7.6 cm³ min⁻¹), l'acétylène (C₂H₂, à raison d'un flux de 11 cm³ min⁻¹) et l'hydrogène (H₂, à raison d'un flux de 477 cm³ min⁻¹). Au bout de 30 minutes, le flux de BCl₃ était stoppé puis immédiatement après celui de l'acétylène et de l'hydrogène. Le substrat était par la suite ramené (naturellement) à la température ambiante et l'échantillon de t-BC₅ produit au cours de ce processus pouvait être facilement récupéré et analysé (par différentes techniques comme par exemple la micro-analyse avec sonde électronique, par spectrométrie de rétrodiffusion Rutherford ou par des analyses chimiques standards) pour s'assurer de la bonne stoechiométrie. Par cette méthode, plusieurs milligrammes de t-BC₅ peuvent être produits en quelques heures.

### b) Synthèse du pentacarbure de bore cubique, c-BC₅.

Le t-BC₅ obtenu à l'étape a) est placé dans une presse multi-enclumes et comprimé à froid jusqu'à 20 GPa.

A cette pression, il est monté en température jusqu'à 2473,16°C (2200K) et maintenu à cette pression et à cette température 10 mn. Puis le chauffage est coupé et l'échantillon de c-BC₅ obtenu est laissé revenir à température ambiante, naturellement.

Une fois la température ambiante atteinte, la pression est diminuée dans l'enceinte jusqu'à revenir à la pression ambiante.

L'échantillon de c-BC₅ est alors sorti de la presse.

### Exemple 2 : Analyse cristallographique.

L'analyse de diffraction X a été obtenue avec une radiation synchrotron.

A température et pression ambiante, le spectre de diffraction X du pentacarbure de bore turbostratique présente de larges raies symétriques 001 et 002 et des réflexions bidimensionnelles asymétriques 10 et 11 qui sont typiques des structures à couches turbostratiques, c'est-à-dire complètement désordonnées dans une dimension.

A pression et température ambiante, les paramètres de maille du t-BC₅ sont: a = 2,43 Å et c = 3,45 Å et montrent une dépendance complexe en fonction de la teneur en bore, de la taille des cristallites et des défauts de structure (contraintes).

A température et pression ambiante, le spectre de diffraction du pentacarbure de bore cubique de l'invention montre seulement les raies *111*, *220* et *311* de la maille cubique, ce qui indique que l'échantillon est une monophase. Le spectre de diffraction X du pentacarbure de bore de l'invention présente de très faibles réflexions *20* et *311*, ce qui est de toute évidence provoqué par une orientation préférentielle forte le long de la direction *111* de la phase de type diamant.

Ceci est très inhabituel pour des phases cubiques isotropes et exclut un mécanisme diffusionel de croissance du c-BC₅.

Le paramètre de maille a du pentacarbure cubique de l'invention, à température et pression ambiante est de 3.635±0.006 Å, ce qui est plus grand que le paramètre de maille a du diamant (a= 3,5667 Å, JCPDS le numéro 6-0675) et du nitrure de bore cubique (3,6158 Å. JCPDS le numéro 35-1365).

Ceci est consistant avec le fait que la liaison B-C est plus longue que les liaisons C-C et B-N. La valeur du paramètre a pour le pentacarbure de bore cubique attendu du mélange idéal (loi de Végard) entre le diamant et le bore "de structure diamant" (*a* = 4,04 Å correspondant à la valeur de la liaison B-B de 1,75 Å) est de 3,646 Å, ce qui est en bon accord avec la valeur expérimentale.

Le pentacarbure de bore cubique obtenu à l'exemple 1 a ensuite été étudié par microscopie électronique de transmission (MET) sur un appareil Visio M2010 HR (JEOL) fonctionnant à 200 KV. La microstructure de l'échantillon a été caractérisée par microscopie électronique de transmission à haute résolution et par champ brillant (BF) ainsi que par diffraction électronique à surface sélectionnée (SAED).

Pour obtenir les espacements interplanaires du pentacarbure de bore cubique, les motifs en anneaux SAED ont été quantitativement évalués en utilisant le logiciel "Process Diffraction".

La constante de caméra a été calibrée avec de l'aluminium standard. Les trois anneaux de diffraction les plus forts *111*, *220* et *311* ont été ensuite utilisés pour l'estimation de la constante de réseau a = 3,59 Å.

Selon les observations MET, le pentacarbure de bore cubique de l'invention apparaît comme des agrégats nanocristallins avec des grains très petits mais clairement visibles. Tous les grains apparaissent ronds.

### Exemple 3 : Mesure de la dureté Vickers

L'échantillon de l'exemple 1 a ensuite été soumis à une mesure de la dureté Vickers. Ces mesures ont été effectuées avec un testeur de microdureté Duramin-20, Struers sous une charge de 1 à 20 N. De l'acier dur (421HV0.1, MPANRW 725001.1105) et un monocristal de nitrure de bore cubique dont la croissance a été effectuée dans le système Li₃N-BN ont été utilisés en tant qu'étalons.

La valeur de dureté obtenue sur le pentacarbure de bore cubique obtenu à l'exemple 1 était *Hᵥ* = 71 GPa, ce qui est proche de la dureté du c-BC₂N cubique, la seconde phase la plus dure connue.

A des charges de 10 et 20 N tonnes, des fissures sont observées, qui étaient environ deux fois plus longues que les empreintes, et d'un ordre de magnitude plus long que la taille des grains.

C'est ce qui a permis de calculer la valeur fiable indépendante de la charge, la ténacité à la fracture par la méthode décrite dans Solozhenko, V.L. & al., "Mechanical properties of cubic BC2N, a new superhard phase", Diamond Relat. Mater. 10, 2228-2231 (2001).

Des essais de nano-indentation ont ensuite été effectués en utilisant le transducteur électrostatique du triboscope UBI 1 (Hysitron).

Une nanodureté extrêmement élevée de 78 GPa a été obtenue.

### Exemple 4 : Mesure de la résistivité électrique.

La résistivité électrique de l'échantillon obtenu à l'exemple 1 a été mesurée à température ambiante par la technique standard de sonde à quatre points combinée à la méthode de van der Pauw, comme décrit dans van der Pauw, L.J. :"A method of measuring specific resistivity and Hall effect of discs of arbitrary shape", Philips Research Reports 13, pp 1-9 (1958), et dans van der Pauw, L.J.:"A method of measuring the resistivity and Hall coefficient on lamellae of arbitrary shape", Philips Technical Review 20, pp 220-224 (1958).

Les dimensions de l'échantillon, le positionnement des sondes et l'espacement entre les électrodes ont été soigneusement mesurés avec un microscope et utilisés pour convertir les données de résistance en résistivité par des facteurs de corrections bien connus, comme décrit dans van der Pauw, L.J.:"A method of measuring specific resistivity and Hall effect of discs of arbitrary shape", Philips Research Reports 13, pp 1-9 (1958), et dans van der Pauw, L.J.:"A method of measuring the resistivity and Hall coefficient on lamellae of arbitrary shape", Philips Technical Review 20, pp 220-224 (1958).

La résistivité électrique à température ambiante du pentacarbure de bore cubique obtenu à l'exemple 1 était de 0,6 Ω m, ce qui est une valeur typique des semi-conducteurs.

### Exemple 5 : Mesure de la stabilité thermique.

L'échantillon de pentacarbure de bore cubique obtenu à l'exemple 1 a ensuite été étudié quant à sa stabilité thermique en utilisant un dispositif multi-anvil MAX80 couplé à une radiation synchrotron.

Les mesures de diffraction ont été effectuées en dispersion d'énergie sur l'anneau de stockage de positron DORIS III, HASYLAB-DESY (Hambourg, Allemagne).

Pour empêcher l'oxydation de l'échantillon, une capsule en graphite a été utilisée.

La température a été contrôlée par un régulateur commandé par un ordinateur dans l'intervalle de température compris entre 673,16°C (400 K) et 1473°C (1200 K) inclus, avec un écart de température de ± 2°C (2 K) et dans l'intervalle de température compris entre 1573,16°C (1300 K) et 2173,16°C (1900 K) inclus avec un écart de température de ± 4°C (4 K).

La température de l'échantillon a été mesurée en utilisant un thermocouple de platine Rhodié-platine, plus précisément de 10%RhPt-Pt avec sa jonction 300 µm en dessous de la région de l'échantillon étudiée.

Les résultats montrent qu'à une température de 2163,16°C (1890 K), il n'y a aucun changement dans les spectres de poudre, ce qui indique une stabilité thermique du pentacarbure de bore cubique de l'invention à des températures inférieures à 2163,16°C (1890 K).

A des températures plus élevées, le pentacarbure de bore cubique de l'invention se décompose en graphite et bore amorphe.

Ainsi, le pentacarbure de bore cubique de l'invention est caractérisé par une stabilité thermique plus élevée de 400 à 500°C (400 à 500 K) que le diamant polycristallin ayant une même taille de grains.

En conclusion, le pentacarbure de bore cubique de l'invention est semi-conducteur, présente une dureté extrême comparable à celle d'un monocristal de diamant et une ténacité à la fracture inhabituellement élevée en combinaison avec une stabilité thermique très élevée; ce qui en fait un matériau super-abrasif exceptionnel.

## Revendications

1. Carbure de bore **caractérisé en ce qu'**il a la formule BC₅ et **en ce qu'**il a une structure cubique de type diamant avec un paramètre de maille a = 3,635 ± 0,006 Å.

2. Carbure de bore selon la revendication 1, **caractérisé en ce qu'**il a:
- une dureté Vickers Hᵥ comprise entre 63 et 79 GPa,
- une nanodureté comprise entre 68 et 88 GPa,
- une stabilité thermique jusqu'à 2163,16°C (1890 K) et,
- une ténacité à la fracture *K*_{Ic} comprise entre 7 et 12 MPa m^{½} inclus.

3. Carbure de bore selon la revendication 1 ou 2, **caractérisé en ce qu'**il a une dureté Vickers *Hᵥ* de 71 GPa, une nanodureté de 78 GPa et une ténacité à la fracture K_{Ic} de 9,5 MPa m^{½}.

4. Procédé de fabrication du carbure de bore selon l'une quelconque des revendications 1 à 3, **caractérisé en ce qu'**il comprend les étapes suivantes:
a) dépôt thermochimique en phase vapeur d'un mélange de C₂H₂, de BCl₃. et de H₂ pour obtenir un précurseur pentacarbure de bore turbostratique, t-BC₅.
b) compression à froid du t-BC₅ obtenu à l'étape a) jusqu'à entre 19 et 22 GPa, de préférence jusqu'à 20 GPa,
c) chauffage à 2473,16° C (2200 K) du précurseur comprimé obtenu à l'étape b),
d) maintien de la pression et de la température entre environ 5 et 15 mn inclus, de préférence 10 minutes, pour faire croître les cristaux de BC₅ cubique obtenus,
e) refroidissement à température ambiante.
f) diminution de la pression jusqu'à pression ambiante.

5. Matériau super-abrasif, **caractérisé en ce qu'**il comprend du carbure de bore selon l'une quelconque des revendications 1 à 3 ou obtenu par le procédé selon la revendication 4.

6. Dispositif d'usinage, **caractérisé en ce qu'**il comprend du carbure de bore selon l'une quelconque des revendications 1 à 3 ou obtenu par le procédé selon la revendication 4.

## Claims

1. Boron carbide, **characterised in that** it has the formula BC₅ and **in that** it has a cubic structure of the diamond type with a lattice parameter a = 3.635 ± 0.006 Å.

2. Boron carbide as claimed in claim 1, **characterised in that** it has:
- a Vickers hardness Hᵥ of between 63 and 79 GPa,
- a nano-hardness of between 68 and 88 GPa,
- thermal stability up to 2163.16° C (1890 K), and
- a fracture toughness *K*_{Ic} of between 7 and 12 MPa m^{½} inclusive.

3. Boron carbide as claimed in claim 1 or 2, **characterised in that** it has a Vickers hardness *Hᵥ* of 71 GPa, a nano-hardness of 78 GPa and a fracture toughness *K*_{Ic} of 9.5 MPa m^{½}.

4. Method of manufacturing boron carbide as claimed in any one of claims 1 to 3, **characterised in that** it comprises the following steps:
a) thermo-chemically depositing, in vapour phase, a mixture of C₂H₂, BCl₃ and H₂ to obtain a turbostratic boron pentacarbide precursor, t-BC₅,
b) cold-compressing the t-BC₅ obtained in step a) to between 19 and 22 GPa, preferably to 20 GPa,
c) heating the compressed precursor obtained in step b) to 2473.16°C (2200 K),
d) maintaining the pressure and temperature for between approximately 5 and 15 mn inclusive, preferably 10 minutes, to cause the resultant crystals of cubic BC₅ to grow,
e) cooling to ambient temperature,
f) reducing the pressure to ambient pressure.

5. Super-abrasive material, **characterised in that** it comprises boron carbide as claimed in any one of claims 1 to 3 or obtained by the method as claimed in claim 4.

6. Machining device, **characterised in that** it comprises boron carbide as claimed in any one of claims 1 to 3 or obtained by the method as claimed in claim 4.

## Patentansprüche

1. Borcarbid, **dadurch gekennzeichnet, dass** es die Formel BC₅ aufweist und dass es eine kubische Struktur vom Diamanttyp mit einem Gitterparameter a = 3,635 ± 0,006 Å aufweist.

2. Borcarbid nach Anspruch 1, **dadurch gekennzeichnet, dass** es aufweist:
- eine Vickershärte Hᵥ, welche zwischen 63 und 79 GPa enthalten ist,
- eine Nanohärte, welche zwischen 68 und 88 GPa enthalten ist,
- eine thermische Stabilität bis 2163,16°C (1890 K) und
- eine Bruchzähigkeit K_{Ic}, welche zwischen 7 und 12 MPa m^{1/2} einschließlich enthalten ist.

3. Borcarbid nach Anspruch 1 oder 2, **dadurch gekennzeichnet, dass** es eine Vickershärte Hᵥ von 71 GPa, eine Nanohärte von 78 GPa und eine Bruchzähigkeit K_{Ic} von 9,5 MPa m^{1/2} aufweist.

4. Verfahren zur Herstellung eines Borcarbids nach einem beliebigen der Ansprüche 1 bis 3, **dadurch gekennzeichnet, dass** es die folgenden Schritte umfasst:
a) thermochemische Dampfphasenabscheidung einer Mischung von C₂H₂, von BCl₃ und von H₂, um einen turbostratischen Bor-Pentacarbid-Vorläufer t-BC₅ zu erhalten,
b) Kaltkompression des im Schritt a) erhaltenen t-BC₅ bis auf zwischen 19 und 22 GPa, vorzugsweise bis auf 20 GPa,
c) Erhitzen auf 2473,16°C (2200 K) des im Schritt b) erhaltenen komprimierten Vorläufers,
d) Beibehalten des Drucks und der Temperatur zwischen ungefähr 5 und 15 Minuten einschließlich, vorzugsweise 10 Minuten, um die erhaltenen kubischen BC₅-Kristalle wachsen zu lassen,
e) Abkühlung auf Raumtemperatur,
f) Verringerung des Drucks bis auf Umgebungsdruck.

5. Superabrasives Material, **dadurch gekennzeichnet, dass** es ein Borcarbid umfasst, welches einem beliebigen der Ansprüche 1 bis 3 entspricht oder durch das Verfahren gemäß Anspruch 4 erhalten ist.

6. Bearbeitungsvorrichtung, **dadurch gekennzeichnet, dass** sie ein Borcarbid umfasst, welches einem beliebigen der Ansprüche 1 bis 3 entspricht oder durch das Verfahren gemäß Anspruch 4 erhalten ist.
